# EUROPEAN PATENT APPLICATION

(11) **EP 1 927 841 A2**
(43) Date of publication of application: **04.06.2008**
(21) Application number: 07120680.9
(22) Date of filing: 14.11.2007
(51) Int. Cl.: G01N 1/04, G01N 33/20

(54) **Chip collecting device for milling machine for slag analysis sample processing**

(30) Priority: 28.11.2006 KR 20060118099
(71) Applicant: Kim, Tae-Suk, Nonhyun-dong namdong-gu, Incheon city (KR)
(72) Inventor: Kim, Tae-Suk, Nonhyun-dong namdong-gu, Incheon city (KR)
(74) Representative: Lösch, Christoph Ludwig Klaus

(57) **Abstract**

Disclosed herein is a chip collecting device for a milling machine for slag analysis sample processing. The chip collecting device includes a collection casing, an air spray nozzle, and a separator. The collection casing is configured such that a collection chamber is formed therein, a discharge port is formed in one side thereof, and a cutter entry hole is formed in the upper surface thereof. The air spray nozzle is mounted to the collection casing. The separator is used to separate air and the chips from each other and to discharge the separated air and chips, and is configured such that a separation chamber is formed therein, an inflow hole is formed in the intermediate portion of the separation chamber, an air discharge hole is formed in the upper side thereof, and a chip discharge hole is formed in the lower side thereof.

## Description

### BACKGROUND OF THE INVENTION

### 1. Field of the Invention

The present invention relates generally to a chip collecting device for a milling machine for slag analysis sample processing and, more particularly, to a chip collecting device for a milling machine for slag analysis sample processing, which efficiently collects and removes chips, which are generated by the cutter of the milling machine when the surface of a slag analysis sample is processed, thus not only improving the efficiency of slag analysis sample processing work but also maintaining clean surroundings.

### 2. Description of the Related Art

In a typical refining process, when iron, for example, iron ore (Fe203 or Fe304), is put into a blast furnace together with coke (C) and limestone (CaC03), and a heat blast having a high temperature is applied thereto, carbon monoxide (CO) is generated by the reaction of the coke (c). Then, oxygen (O) is removed from the iron ore in the process in which this carbon monoxide (CO) is oxidized to carbon dioxide (CO2), and thus the iron ore is deoxidized to the iron (Fe).

Meanwhile, the limestone (CaC03), which is put into the blast furnace together with the coke (C), is thermally decomposed into calcium oxide (CaO) in the blast furnace. This causes slag, in the form of CaSi03 sediment, to be made by removing impurities, which are mixed with the iron ore, that is, silicate minerals, which are mixed with the iron ore.

Such slag functions to prevent molten metal from being polluted due to the atmosphere in the blast furnace, to absorb and separate harmful impurities, and to maintain the temperature of the molten metal, and is classified as acid slag, neutral slag, or basic slag. The characteristics of slag vary according to the silicate degree of the slag.

In order to perform quantitative chemical analysis on pieces of metal and minerals, which are contained in the slag, inspection is conducted using an Inductively Coupled Plasma Optical Emission Spectrometer (ICP-OES). For the inspection, milling must be performed on the surface of the slag. In this case, a slag analysis sample processing milling machine is used.

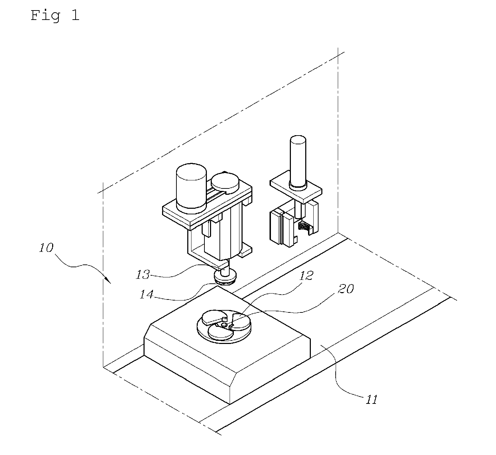

As shown in FIG. 1, the conventional milling machine for slag analysis sample processing is configured such that a slag analysis sample 20, which is picked from a blast furnace, is held by clamps 12, which are provided on the upper surface of a table 11, and is fastened thereto, and the surface of the slag analysis sample 20 is processed by a cutter 14, which is fitted into a shaft 13, which is rotated by a motor, when the cutter 14 is moved in a lateral direction, or the table 11 is moved in a lateral direction while the cutter 14 is rotating.

However, in the conventional milling machine 10 for slag analysis sample processing, the chips, which are generated when the surface of the slag analysis sample 20 is processed by the cutter 14, are scattered around the clamps 12 or the table 11, so that problems occurs in that the milling machine 10 for slag analysis sample processing and the surroundings thereof become untidy, and in that the chips enter into the milling machine 10 for analysis sample processing, and thus cause damage to and trouble in the milling machine 10 for analysis sample processing.

### SUMMARY OF THE INVENTION

Accordingly, the present invention has been made keeping in mind the above problems occurring in the prior art, and an object of the present invention is to provide a chip collecting device for a milling machine for slag analysis sample processing, which efficiently collects chips, which are generated by the cutter of the milling machine when the surface of a slag analysis sample is processed, and removes the collected chips by discharging them to a predetermined location, thus keeping both the milling machine for slag analysis sample processing and the surroundings clean.

In order to accomplish the above object, the present invention provides a chip collecting device for a milling machine for slag analysis sample processing, including: a collection casing, which is fixedly mounted so as to surround clamps, which are used to hold and support an analysis sample picked from a blast furnace for slag inspection, and is configured such that a collection chamber for collecting chips from the analysis sample, which is polished by the cutter of the milling machine for analysis sample processing, is formed therein, a discharge port for discharging the chips, collected in the collection chamber, to an outside is formed in one side thereof, and a cutter entry hole for allowing the cutter of the milling machine for analysis sample processing to enter therethrough is formed in the upper surface thereof; an air spray nozzle, which is mounted to the collection casing such that the chips collected in the collection chamber of the collection casing can be discharged to the outside through the discharge port by blowing air having a predetermined pressure; and a separator, which is used to separate air, which is discharged through the discharge port of the collection casing, and the chips from each other and to discharge the separated air and chips, and is configured such that a separation chamber is formed therein, an inflow hole, communicating with the discharge port of the collection casing, is formed in the intermediate portion of the separation chamber, an air discharge hole, which is used to discharge the air, separated from the chips, to the outside, is formed in the upper side thereof, and a chip discharge hole for discharging the chips, separated from the air, to the outside is formed in the lower side thereof.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing a conventional milling machine for slag analysis sample processing;
FIG. 2 is a perspective view showing a chip collecting device for a milling machine for slag analysis sample processing according to an embodiment of the present invention; and
FIG. 3 is a sectional view showing the chip collecting device for a milling machine for slag analysis sample processing according to the embodiment of the present invention.

### DESCRIPTION OF THE PREFERRED EMBODIMENTS

A chip collecting device for a milling machine for slag analysis sample processing according to the present invention is described in detail with reference to the accompanying drawings below.

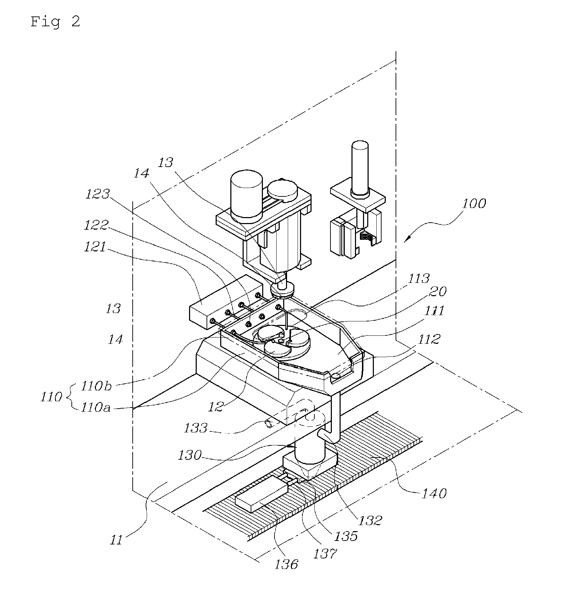

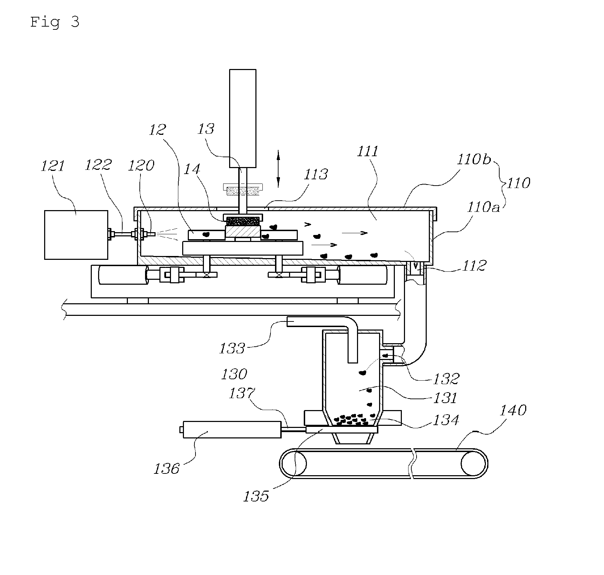

FIG. 2 is a perspective view showing a chip collecting device for a milling machine for slag analysis sample processing according to an embodiment of the present invention, and FIG. 3 is a sectional view showing the chip collecting device for a milling machine for slag analysis sample processing according to the embodiment of the present invention.

As shown in FIGS. 2 and 3, the chip collecting device 100 for a milling machine for slag analysis sample processing according to the present invention includes a collection casing 110, which is fixedly mounted so as to surround clamps 12, which are used to hold and support an analysis sample 20, picked from a blast furnace for slag inspection, and is configured such that a collection chamber 111 for collecting chips from the analysis sample 20, which is polished by the cutter 14 of the milling machine 10 for analysis sample processing, is formed therein, a discharge port 112 for discharging the chips, collected in the collection chamber 111, to the outside is formed in one side thereof, and a cutter entry hole 113 for allowing the cutter 14 of the milling machine 10 for analysis sample processing to enter therethrough is formed in the upper surface thereof; an air spray nozzle 120, which is mounted to the collection casing 110 so that the chips collected in the collection chamber 111 of the collection casing 110 can be discharged to the outside through the discharge port 112 by blowing air having a predetermined pressure; a separator 130, which is used to separate air, which is discharged through the discharge port 112 of the collection casing 110, and the chips from each other and to discharge the separated air and chips, and is configured such that a separation chamber 131 is formed therein, an inflow hole 132, communicating with the discharge port 112 of the collection casing 110, is formed in the intermediate portion of the separation chamber 131, an air discharge hole 133, which is used to discharge the air, separated from the chips, to the outside, is formed in the upper side thereof, and a chip discharge hole 134 for discharging the chips, separated from the air, to the outside is formed in the lower side thereof; and a transfer conveyer 140, which is configured to receive the chips, which are discharged through the chip discharge hole 134 of the separator 130, and to transfer the received chips to a predetermined location.

An opening and closing door 135 is provided in the chip discharge hole 134 of the separator 130. Accordingly, a predetermined amount of chips can be collected in the separation chamber 131 of the separator 130, or can be discharged to the outside through the chip discharge hole 134, according to the opening and closing of the door 135. The air spray nozzle 120 is connected to an air compressor 121, which is used to compress air at a predetermined pressure and discharge the compressed air, via a connection pipe 122.

The collection casing 110 includes a casing main body 110a, which is configured such that the collection chamber 11, the upper portion of which is open, is formed therein, and the discharge port 112 is formed in one side thereof, and a casing cover 110b, which is configured to cover the collection chamber 111, is integrally coupled with the casing main body 110a, and is configured such that the cutter entry hole 113, through which the cutter 14 of the milling machine 10 for analysis sample processing enters, is formed therein. The casing main body 110a and the casing cover 110b are separately formed and are integrally coupled to each other.

The bottom of the collection chamber 111 of the collection casing 110 is formed at an angle of inclination so that the chips of the slag analysis sample 20 can flow in the direction of the discharge port 112 and can be smoothly discharged through the discharge port 112. The opening and closing door 135, which is mounted in the chip discharge hole 134 of the separator 130, is connected with the rod 137 of an opening and closing cylinder 136, and is moved to open or close the chip discharge hole 134 according to the operation of the opening and closing cylinder 136.

The operation of the chip collecting device 100 for a milling machine for slag analysis sample processing according to the present invention, which is constructed as described above, is described below.

When chips are generated while the surface of the slag analysis sample 20 is processed by the cutter 14 in the state in which the slag analysis sample 20 is held by the clamps 12 and is fastened thereto, the chips fall to the collection chamber 111 of the collection casing 110, and are gathered in the collection chamber 111.

In this state, when air having a predetermined pressure is sprayed through the air spray nozzle 120, which is mounted to the collection casing 110, the chips, which have fallen to and have been gathered in the collection chamber 111 of the collection casing 110, are transferred together with the air and are then discharged to the outside through the discharge port 112 of the collection casing 110.

Thereafter, the chips and the air, which are discharged to the outside through the discharge port 112 of the collection casing 110, flow into the separation chamber 131 through the inflow hole 132 of the separator 130. In this case, the air and the chips, which flow into the separation chamber 131, are separated from each other according to their weights. In greater detail, the chips fall down and are discharged to the outside through the chip discharge hole 134, but the air rises and is discharged to the outside through the air discharge hole 133.

Furthermore, the chips, which are discharged to the outside through the chip discharge hole 134 of the separator 130, are transferred to and are gathered in a predetermined location by the transfer conveyer 140, which is installed below the separator 130.

As described above, in the chip collecting device for a milling machine for slag analysis sample processing according to the present invention, chips, which are generated when the surface of a slag analysis sample is processed, are separately collected and are removed through discharging, so that the efficiency of slag analysis sample processing work can be improved and, in addition, the milling machine for slag analysis sample processing and the surroundings can be kept clean.

Furthermore, damage to and trouble in the milling machine, which may be caused by the flow of chips, which are generated when the surface of a slag analysis sample is processed, into the milling machine for slag analysis sample processing, can be prevented.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A chip collecting device for a milling machine for slag analysis sample processing, comprising:
a collection casing, which is fixedly mounted so as to surround clamps, which are used to hold and support an analysis sample picked from a blast furnace for slag inspection, and is configured such that a collection chamber for collecting chips from the analysis sample, which is polished by a cutter of the milling machine for analysis sample processing, is formed therein, a discharge port for discharging the chips, collected in the collection chamber, to an outside is formed in one side thereof, and a cutter entry hole for allowing the cutter of the milling machine for analysis sample processing to enter therethrough is formed in an upper surface thereof;
an air spray nozzle, which is mounted to the collection casing such that the chips collected in the collection chamber of the collection casing can be discharged to the outside through the discharge port by blowing air having a predetermined pressure; and
a separator, which is used to separate air, which is discharged through the discharge port of the collection casing, and the chips from each other and to discharge the separated air and chips, and is configured such that a separation chamber is formed therein, an inflow hole, communicating with the discharge port of the collection casing, is formed in an intermediate portion of the separation chamber, an air discharge hole, which is used to discharge the air, separated from the chips, to the outside, is formed in an upper side thereof, and a chip discharge hole for discharging the chips, separated from the air, to the outside is formed in a lower side thereof.

2. The chip collecting device as set forth in claim 1, wherein an opening and closing door is provided in the chip discharge hole of the separator,
wherein a predetermined amount of chips is collected in the separation chamber of the separator, or is discharged to the outside through the chip discharge hole, according to opening and closing of the door.

3. The chip collecting device as set forth in claim 1 or 2, further comprising a transfer conveyer, which is configured to receive the chips, which are discharged through the chip discharge hole of the separator, and to transfer the received chips to a predetermined location.

4. The chip collecting device as set forth in claim 1, wherein the collection casing comprises a casing main body, which is configured such that the collection chamber, an upper portion of which is open, is formed therein, and the discharge port is formed in one side thereof, and a casing cover, which is configured to cover the collection chamber, is integrally coupled with the casing main body, and is configured such that the cutter entry hole, through which the cutter of the milling machine for analysis sample processing enters, is formed therein,
wherein the casing main body and the casing cover are separately formed.
